# FASCICULE DE BREVET EUROPEEN

(11) **EP 0 946 306 B1**
(45) Date de publication et mention de la délivrance du brevet: **07.03.2001**
(21) Numéro de dépôt: 97947823.7
(22) Date de dépôt: 30.12.1997
(51) Int. Cl.: B05B 15/04, B05B 7/24

(54) **PROCEDE ET INSTALLATION POUR REVETIR UNE SURFACE D'UN SUBSTRAT AVEC UNE COUCHE D'UNE MATIERE FLUIDE**
VERFAHREN UND ANLAGE ZUM AUFTRAGEN EINER SCHICHT VON FLÜSSIGEM MATERIAL AUF EINE SUBSTRATOBERFLÄCHE
PROCESS AND DEVICE FOR COVERING THE SURFACE OF A SUBSTRATE WITH A LAYER OF FLUID MATERIAL

(30) Priorité: 30.12.1996 FR 9616377
(43) Date de publication de la demande: 06.10.1999
(73) Titulaire: BIO MERIEUX, 69280 Marcy l'Etoile (FR)
(72) Inventeur: COLIN, Bruno, F-69280 Marcy l'Etoile (FR)
(74) Mandataire: Guerre, Dominique
(86) Numéro de dépôt international: IB9701608
(87) Numéro de publication internationale: WO9829194

(56) Documents cités:
- WO-A-79/00469
- WO-A-92/12803
- WO-A-96/09122
- GB-A- 1 134 069
- US-A- 2 488 195
- US-A- 4 788 739

## Description

La présente invention concerne le revêtement d'une surface d'un substrat avec une couche d'une matière fluide, ou le dépôt sur ladite surface d'une couche continue de ladite matière fluide.

Différentes solutions ont déjà été proposées par l'art antérieur, pour revêtir une surface d'un substrat, en mouvement relatif ou non, avec une matière fluide (liquide ou poudre par exemple).

Toutes les solutions proposées ont en commun, d'une part la formation préalable, en surpression ou sous dépression, d'un écoulement mixte turbulent, obtenu par mélange, avec entraînement si nécessaire, d'un flux fluide contrôlé comprenant la matière fluide de revêtement, et d'un flux gazeux, et d'autre part diverses dispositions permettant de récupérer l'écoulement mixte turbulent non utilisé ou non consommé, pour éviter sa diffusion dans l'air ambiant.

Conformément au document **WO-92/12803,** et en particulier selon le mode d'exécution décrit par référence aux Figures 22 à 24, et de la ligne 11 de la page 27, à la ligne 33 de la page 29, il est décrit une installation pour revêtir la surface d'un substrat 643 avec une matière fluide.

Cette installation comprend un moyen de traitement comprenant une paroi de confinement 657, avec une bordure définissant la zone à traiter. Un moyen 666 permet d'établir une dépression contrôlée au sein de la zone à traiter, en admettant plusieurs flux gazeux entrants 684 et 680, par l'interstice précité. Un moyen d'introduction contrôlée, ou tête 642, dans la zone à traiter de la matière fluide 644, associe un interstice d'écoulement contrôlé avec une entrée d'air sous pression 645/446, pour produire directement à la sortie de tête un écoulement mixte turbulent 682/683, circulant au contact du substrat 643; cf page 27, lignes 14 à 21.

Tous les flux d'air entrant 684 et 680 ne sont formés que pour contenir l'écoulement mixte turbulent dans la zone à traiter; cf par exemple page 29, lignes 1 à 4, et lignes 25 à 30.

Conformément au document **WO-79/00469,** on obtient un écoulement mixte turbulent en mélangeant préalablement un flux fluide contrôlé (3) comprenant la matière fluide de revêtement, et un flux gazeux, ces deux flux étant en surpression pour éjecter l'écoulement mixte au travers d'une chambre de distribution (5). Deux parois successives de confinement de forme cylindrique ménagent deux volumes périphériques concentriques 6 et 7, sous dépression, pour évacuer l'écoulement mixte turbulent après son contact avec la surface à revêtir.

Conformément au document **GB-1 134 069,** on obtient un écoulement mixte turbulent, sous dépression, en mélangeant un flux fluide (poudre), et un flux gazeux. L'écoulement mixte turbulent en résultant circule à co-courant, toujours sous dépression, au contact de la surface d'un substrat allongé se déplaçant en translation.

Conformément au document **WO-96/09122,** on décrit une buse de projection d'une poudre, permettant d'éjecter sous pression un écoulement mixte turbulent, obtenu préalablement par mélange d'un flux fluide (poudre) et d'un flux gazeux. L'écoulement mixte non utilisé est reaspiré autour de la buse par des moyens appropriés.

Au terme de cet examen, toutes les solutions antérieures présentent la caractéristique commune de pousser en quelque sorte la matière fluide sur la surface du substrat à revêtir. Cette caractéristique peut se révéler peu efficace pour revêtir des substrats de surface irrégulière, par exemple poreux en surface.

Conformément à la présente invention, on considère donc tout substrat ou subjectile, dont la surface apparente est inférieure en valeur à la surface réelle ou développée du même substrat, en raison de la présence d'aspérités, rugosités, ou encore porosités superficielles, générant une surface développée plus importante que la surface apparente, c'est-à-dire celle visible à l'oeil nu.

La présente invention a pour objet un procédé et une installation permettant de revêtir une surface telle que définie précédemment, et ceci, en attirant en quelque sorte la matière fluide de revêtement vers et au sein de toute la surface du substrat.

Le procédé conforme à la présente invention associe en coopération les étapes suivantes :
a) avec une paroi de confinement refermée sur elle-même, disposée à distance et au-dessus de la surface à revêtir, et dont la bordure inférieure ménage avec cette dernière un interstice périphérique, on définit ou dispose d'une enceinte de traitement délimitant sur la surface à revêtir une zone à traiter
b) on établit une dépression contrôlée au sein de l'enceinte de traitement, en admettant un flux gazeux entrant par l'interstice périphérique, et en extrayant un flux gazeux sortant de l'enceinte de traitement, pour obtenir dans ladite enceinte une pression interne inférieure à la pression externe, c'est-à-dire à l'extérieur de la même enceinte
c) on introduit dans l'enceinte de traitement sous dépression un flux fluide contrôlé, comprenant la matière fluide de revêtement, qui forme, au niveau de l'interstice périphérique, avec le flux gazeux entrant, un écoulement mixte turbulent, aspiré au contact de la surface développée dans la zone à traiter, et déposant dans cette dernière la matière fluide; puis cet écoulement mixte est évacué avec le flux gazeux sortant.

Une installation pour la mise en oeuvre du procédé précédemment décrit comprend, de manière générale :
- un moyen de traitement, comprenant une paroi de confinement refermée sur elle-même, agencée pour être disposée à distance et au-dessus de la surface à revêtir, avec une bordure inférieure adaptée ou agencée pour ménager avec ladite surface à revêtir un interstice périphérique; cette paroi de confinement définit une enceinte de traitement délimitant une zone à traiter sur la surface à revêtir
- des moyens pour établir une dépression contrôlée au sein de l'enceinte de traitement, en admettant un flux gazeux entrant par l'interstice périphérique, et en extrayant un flux gazeux sortant de l'enceinte de traitement, pour obtenir une pression interne dans ladite enceinte, inférieure à la pression externe, c'est-à-dire à l'extérieur de ladite enceinte
- un moyen d'introduction contrôlée dans l'enceinte de traitement, sous dépression, d'un flux fluide comprenant la matière fluide de revêtement, pour former, au niveau de l'interstice périphérique, avec le flux gazeux entrant, un écoulement mixte turbulent, aspiré au contact de toute la surface développée dans la zone à traiter, en y déposant la matière fluide; puis cet écoulement mixte est évacué avec le flux gazeux sortant.

Par "matière fluide", on entend tout produit, matériau ou matière, à l'état liquide, fluide, ou visqueux, susceptible d'être dispersé par le flux gazeux entrant dans l'enceinte de traitement, pour former avec ce dernier un écoulement turbulent, mixte, c'est-à-dire composé de particules de ladite matière fluide en suspension dans ce flux gazeux entrant, et ceci dans les conditions, notamment de température, prédéterminées, retenues pour le traitement de la surface à revêtir avec ladite matière fluide. A titre d'exemple d'une telle matière fluide, on citera toute peinture, comportant des pigments ou colorants en suspension ou solution dans un milieu liquide approprié, ou encore toute matière à l'état sensiblement solide ou solide dans les conditions normales ou ambiantes de température, mais liquide ou liquéfiée à la température de traitement de la surface, le revêtement obtenu se solidifiant ensuite sur la surface du substrat; dans ce dernier cas, on citera par exemple tout hydrocarbure lourd, par exemple une paraffine.

Par "flux fluide", on entend tout flux ou écoulement liquide, fluide, visqueux ou pâteux, susceptible d'être dispersé par le flux gazeux entrant dans l'enceinte de traitement, dans les conditions, notamment de température, retenues ou prédéterminées pour le fonctionnement de l'enceinte de traitement.

Grâce au procédé et à l'installation selon la présente invention, le traitement ou revêtement de la surface du substrat traité s'effectue au plus près de ce dernier, sans projection à l'extérieur ou vers l'extérieur de la matière fluide retenue pour recouvrir ladite surface.

L'invention telle que précédemment définie, se distingue de chaque document, précédemment introduit à titre d'art antérieur, par l'existence d'un interstice périphérique, défini entre la bordure inférieure de la paroi de confinement et la surface à revêtir, au niveau duquel le flux contrôlé (matière fluide de revêtement) est introduit dans le flux gazeux entrant par ledit interstice, et en conséquence au niveau duquel l'écoulement mixte turbulent, nécessaire pour revêtir ladite surface est obtenu.

Cette différence fondamentale permet d'apporter la matière fluide de revêtement, de manière dynamique et au plus près de la surface à revêtir.

La présente invention est maintenant décrite par référence au dessin annexé dans lequel:
- la Figure 1 représente, de manière schématique, une installation conforme à la présente invention,
- la Figure 2 représente, toujours de manière schématique, un moyen ou tête de traitement, appartenant à l'installation représentée à la Figure 1
- la Figure 3 représente, à échelle agrandie, un substrat, tel que traité ou revêtu selon l'invention.

Une installation selon l'invention comporte de manière générale:
- un moyen ou tête de traitement 14, déplaçable par rapport à la surface la du substrat 1 à revêtir ou recouvrir, et agencé pour être manipulé par l'utilisateur; ce moyen comporte à titre principal une paroi 3 de confinement, refermée sur elle-même, ayant par exemple une symétrie de révolution, définissant une enceinte 5 de traitement, laquelle délimite en vis-à-vis une zone 6 à traiter de la surface à revêtir la
- des moyens 13 pour établir une dépression contrôlée au sein de l'enceinte 5 de traitement
- un moyen 16 d'introduction contrôlée dans l'enceinte de traitement, sous dépression, d'un flux fluide 10 comprenant la matière fluide de revêtement
- un moyen de séparation 17, permettant d'obtenir un flux gazeux 18 et un flux fluide 19
- un moyen 30 de recyclage du flux fluide vers le moyen 16 d'introduction contrôlée
- et un autre moyen de recyclage du flux gazeux 18, identique au moyen 13 de dépression contrôlée.

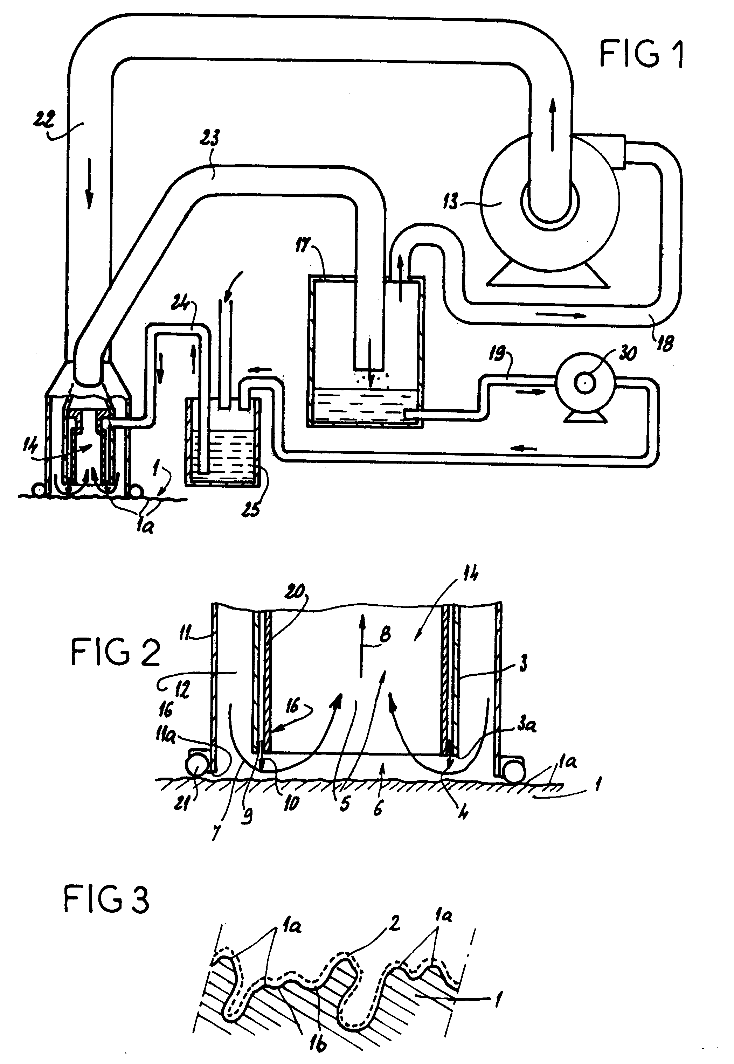

Le moyen ou tête de traitement 14, plus particulièrement représenté à la Figure 2, présente de manière générale une symétrie de révolution autour d'un axe, et a généralement la forme d'une cloche par exemple. Ce moyen 14 comprend, de l'extérieur vers l'intérieur, une paroi externe 11, refermée sur elle-même, une paroi 3 de confinement, également refermée sur elle-même, séparée de la paroi externe, et délimitant avec cette dernière un passage annulaire 12, et une paroi interne 20, disposée à distance de la paroi de confinement 3, mais suffisamment proche de cette dernière pour former un canal capillaire cylindrique, se terminant par un orifice calibré 9, formant ainsi un moyen d'introduction contrôlée 16, sous la dépendance de la différence de pression existant entre l'amont et l'aval dudit orifice. L'enceinte de traitement 5 est délimitée à l'intérieur de la paroi 3 de confinement, et plus exactement à l'intérieur de la paroi interne 20. Par construction, la bordure inférieure 11a de la paroi externe 11 se trouve au-dessous de la bordure inférieure 3a de la paroi 3 de confinement, de telle sorte qu'un interstice périphérique 4 est ménagé entre la bordure inférieure 3a et la surface la du substrat à traiter, pendant la mise en oeuvre ou utilisation de la tête ou moyen de traitement 14. La bordure inférieure lia de la paroi externe 11 est équipée de moyens de roulement 21, tels que roulettes, ce qui permet d'assurer un déplacement sans frottement de la tête ou moyen 14 de traitement, sur toute la surface la du substrat 1. Ces roulettes sont disposées de manière à ménager entre la bordure inférieure lia et la surface la à revêtir, un passage de fuite de l'air ambiant vers l'intérieur de la tête de traitement 14.

Ce moyen ou tête de traitement 14 est relié aux autres composants de l'installation, comme suit :
- le passage annulaire 12 communique par un tuyau 22 avec le refoulement du moyen 13 de dépression contrôlée, ou pompe, qui recycle le flux gazeux 18 obtenu à la sortie du moyen de séparation 17 vers le passage annulaire 12, pour constituer le flux gazeux entrant 7, passant de manière calibrée dans l'interstice périphérique 4
- par un tuyau 23, passant de manière étanche dans le tuyau 22, la sortie de l'enceinte de traitement 5 communique avec l'entrée du moyen de séparation 17, pour l'évacuation du flux gazeux 8 sortant de ladite enceinte
- le canal cylindrique capillaire, se terminant par l'orifice calibré 9 communique par un tuyau 24 avec une réserve intermédiaire 25 de matière fluide, elle-même reliée au refoulement d'une pompe 30.

Le moyen 13, ou pompe, permet d'assurer le recyclage du flux gazeux 18 sortant du moyen de séparation 17, en tant que flux gazeux entrant 7 dans l'enceinte de traitement 5. Et ce même moyen 13, par l'aspiration de la pompe, permet d'établir une dépression contrôlée au sein de l'enceinte 5, par l'intermédiaire du moyen de séparation 17. Cette dépression contrôlée est le résultat, d'un côté du flux gazeux 7 entrant de manière contrôlée par l'interstice périphérique 4, et du flux gazeux sortant 8, extrait de l'enceinte de traitement 5 par le tuyau 23, le tout pour obtenir dans l'enceinte 5 une pression interne, inférieure à la pression externe, c'est-à-dire à celle régnant dans le passage annulaire 12.

Le moyen d'introduction contrôlée 16 s'identifie à l'orifice calibré 9, laissant passer le flux fluide 10, lorsque la différence de pression entre l'amont et l'aval de cet orifice est supérieure à la perte de charge, de ce dernier vis-à-vis du même flux fluide 10. En fonctionnement, le moyen d'introduction contrôlée est donc sous la dépendance de la dépression régnant dans l'enceinte 5, et par conséquent de la pression interne dans cette dernière, en relation avec la pression externe dans le passage annulaire 12.

Le moyen ou pot de séparation 17 est relié par le tuyau 23 à la sortie de l'enceinte 5 de traitement. Ce moyen permet de séparer l'écoulement mixte recueilli, d'une part en un flux fluide 19 recyclé par la pompe 30 vers le récipient de stockage intermédiaire 25, et d'autre part en un flux gazeux 18 recyclé par la pompe 13 vers le passage annulaire 12 du moyen ou tête de traitement 14.

En fonctionnement, la tête ou moyen de traitement 14 est disposée au dessus mais néanmoins à distance de la surface la du substrat 1 à revêtir, et définit une zone 6 de cette dernière à traiter, laquelle se déplace selon toute la surface du substrat, en fonction du déplacement manuel par exemple de la tête ou moyen de traitement 14.

Par mise en route de la pompe 13, on établit une dépression contrôlée au sein de l'enceinte 5 de traitement, de telle sorte qu'un pression interne, inférieure à la pression externe dans le passage annulaire 12, s'établit dans ladite enceinte.

Sous l'effet de la dépression existant dans l'enceinte 5, on introduit un flux fluide contrôlé 10, au niveau de l'interstice périphérique 4, à l'intérieur de l'enceinte de traitement 5. Ce flux fluide 10 comprend 1a matière fluide de revêtement, et forme avec le flux gazeux entrant 7 un écoulement mixte turbulent, lequel est aspiré au contact de la surface développée 1b dans la zone 6 à traiter (cf Figure 3). C'est cet écoulement mixte turbulent qui dépose la matière fluide, dans toutes les aspérités, rugosités et porosités de la surface du substrat 1, puis cet écoulement mixte est évacué de l'enceinte 5 avec le flux gazeux sortant 8.

L'écoulement mixte turbulent résiduel, introduit dans le moyen de séparation 17, est séparé en un flux liquide recyclé vers le récipient intermédiaire 25, et un flux gazeux 18 recyclé par la pompe 13 vers le passage annulaire 12 de la tête ou moyen de traitement 14.

Au total, on obtient un revêtement uniforme, régulier et continu 2, sur toute la surface développée 1b du substrat 1, comme montré à la Figure 3.

## Revendications

1. Procédé pour revêtir une surface (1a) d'un substrat (1) avec une couche (2) d'une matière fluide, selon lequel :
(a) avec une paroi (3) de confinement refermée sur elle-même, disposée à distance et au-dessus de la surface à revêtir (1a), et dont la bordure inférieure (3a) ménage avec cette dernière un interstice périphérique (4), on définit une enceinte (5) de traitement délimitant une zone (6) à traiter sur ladite surface à revêtir
(b) on établit une dépression contrôlée au sein de l'enceinte (5) de traitement, en admettant un flux gazeux entrant (7) par l'interstice périphérique (4), et en extrayant un flux gazeux sortant (8) de l'enceinte de traitement, pour obtenir une pression interne dans ladite enceinte, inférieure à la pression externe
(c) on forme dans l'enceinte de traitement (5) sous dépression un écoulement mixte turbulent entre un flux fluide (10), comprenant la matière fluide de revêtement, et un flux gazeux, ledit écoulement mixte turbulent venant au contact de la surface développée (1b) dans la zone (6) à traiter, en y déposant la matière fluide, puis étant évacué avec le flux gazeux sortant (8)
**caractérisé en ce qu'**on introduit de manière contrôlée le flux fluide (10) au niveau de l'interstice périphérique (4), entre la bordure inférieure (3a) de la paroi (3) de confinement et la surface à revêtir (1a), ledit flux fluide contrôlé formant avec le flux gazeux (7) entrant par ledit interstice, l'écoulement mixte turbulent, aspiré au contact de la surface développée (1b) dans la zone (6) à traiter.

2. Procédé selon la revendication 1, caractérisé en ce que le flux fluide (10) introduit (7) dans l'enceinte de traitement (5) est contrôlé par un orifice calibré (9), laissant passer ledit flux fluide lorsque la différence de pression entre l'amont et l'aval dudit orifice est supérieure à la perte de charge dudit orifice vis-à-vis dudit flux fluide.

3. Procédé selon la revendication 1, caractérisé en ce que, avec une autre paroi (11) externe, refermée sur elle-même, séparée de la paroi (3) de confinement, on délimite avec cette dernière un passage (12) pour le flux gazeux entrant (7) par l'interstice périphérique (4) entre la bordure inférieure (3a) de la paroi (3) de confinement et la surface à revêtir (1a).

4. Installation pour revêtir la surface (1a) d'un substrat (1) avec une couche (2) d'une matière fluide, comprenant :
- un moyen (14) de traitement, comprenant une paroi (3) de confinement refermée sur elle-même, agencée pour être disposée à distance et au-dessus de la surface à revêtir (1a), avec une bordure inférieure (3a) adaptée pour ménager avec cette dernière un interstice périphérique (4), ladite paroi de confinement définissant une enceinte (5) de traitement délimitant une zone (6) à traiter sur ladite surface à revêtir
- un moyen (13) pour établir une dépression contrôlée au sein de l'enceinte (5) de traitement, en admettant un flux gazeux entrant (7) par l'interstice périphérique (4), et en extrayant un flux gazeux sortant (8) de l'enceinte de traitement, pour obtenir une pression interne dans ladite enceinte, inférieure à la pression externe
- un moyen de formation dans l'enceinte de traitement (5) sous dépression, d'un écoulement mixte turbulent entre un flux fluide (10), comprenant la matière fluide de revêtement, et un flux gazeux, ledit écoulement mixte turbulent venant au contact de la surface développée (1b) dans la zone (6) à traiter, en y déposant la matière fluide, puis étant évacué avec le flux sortant (8)
caractérisé en ce que le moyen de formation de l'écoulement mixte turbulent est un moyen d'introduction contrôlée (16) du flux fluide (10), disposé au niveau de l'interstice périphérique (4) entre la bordure inférieure (3a) de la paroi (3) de confinement et la surface à revêtir (1a), ledit flux fluide contrôlé formant avec le flux gazeux entrant par ledit interstice, l'écoulement mixte turbulent, aspiré au contact de la surface développée (1b) dans la zone (6) à traiter.

5. Installation selon la revendication 4, caractérisée en ce que les moyens d'introduction contrôlée (16) du flux fluide comprennent un orifice calibré (9), laissant passer le flux fluide lorsque la différence de pression entre l'amont et l'aval dudit orifice est supérieure à la perte de charge dudit orifice vis-à-vis dudit flux fluide.

6. Installation selon la revendication 4, caractérisée en ce que le moyen de traitement (14) comprend une autre paroi (11), externe, refermée sur elle-même, séparée de la paroi de confinement (3), délimitant avec cette dernière un passage (12) pour le flux gazeux entrant par l'interstice périphérique (4) entre la bordure inférieure (3a) de la paroi (3) de confinement et la surface à revêtir (1a).

7. Installation selon la revendication 4, caractérisée en ce qu'elle comprend :
- un moyen de séparation (17) de l'écoulement mixte, en un flux gazeux (18) et un flux fluide (19)
- un moyen de recyclage (30) de flux fluide vers le moyen d'introduction contrôlée (16)
- un autre moyen de recyclage (13) du flux gazeux (18) en tant que flux gazeux entrant (7), ledit moyen de recyclage du flux gazeux étant notamment identique au moyen de dépression contrôlée.

## Patentansprüche

1. Verfahren zum Bedecken einer Oberfläche (1a) eines Substrates (1) mit einer Schicht (2) eines flüssigen Materials, bei dem:
(a) durch eine in sich geschlossene Abschirmwand (3), die im Abstand und oberhalb der zu bedeckenden Oberfläche (1a) angeordnet ist, und deren untere Kante (3a) zu der Oberfläche einen peripheren Zwischenraum (4) beläßt, ein Behandlungsraum (5) definiert wird, der einen zu behandelnden Bereich (6) auf der zu bedeckenden Oberfläche begrenzt;
(b) innerhalb des Behandlungsraums (5) ein kontrollierter Unterdruck errichtet wird, um in dem Raum einen inneren Druck zu erzielen, der niedriger ist als der äußere Druck, wodurch ein durch den peripheren Zwischenraum (4) eintretender gasförmiger Strom (7) ermöglicht wird und ein austretender Gasstrom (8) aus dem Behandlungsraum abgezogen wird;
(c) sich in dem unter Unterdruck stehenden Behandlungsraum (5) zwischen einem flüssigen Strom (10), der das flüssige Bedeckungsmaterial hält, und einem gasförmigen Strom eine turbulente vermischte Abströmung ausbildet, wobei die turbulente vermischte Abströmung mit der ausgedehnten Oberfläche (1b) in dem zu behandelnden Bereich (6) in Kontakt tritt, wobei das flüssige Material sich dort niederschlägt und die turbulente vermischte Abströmung anschließend mit dem austretenden gasförmigen Strom (8) abgeführt wird,
**dadurch gekennzeichnet, daß** auf kontrollierte Art und Weise der flüssige Strom (10) im Bereich des peripheren Zwischenraums (4) zwischen der unteren Kante (3a) der Abschirmwand (3) und der zu bedeckenden Oberfläche (1a) eingeführt wird, wobei der kontrollierte flüssige Strom mit dem durch den Zwischenraum eintretenden gasförmigen Strom (7) die turbulente vermischte Abströmung ausbildet, die vom Kontakt mit der ausgedehnten Oberfläche (1b) in dem zu behandelnden Bereich (6) abgesaugt wird.

2. Verfahren nach Anspruch 1, dadurch gekennzeichnet, daß der in den Behandlungsraum (5) eingeführte flüssige Strom (10) durch eine kalibrierte Öffnung (9) kontrolliert wird, die den flüssigen Strom dann hindurchtreten läßt, wenn der Druckunterschied stromaufwärts und stromabwärts der Öffnung größer ist als die Verlustlast dieser Öffnung gegenüber diesem flüssigen Strom.

3. Verfahren nach Anspruch 1, dadurch gekennzeichnet, daß eine weitere in sich geschlossene äußere Wand (11), die von der Abschirmwand (3) getrennt ist, mit der letzteren einen Durchtritt (12) für den gasförmigen Strom (7) schafft, der durch den peripheren Zwischenraum (4) zwischen der unteren Kante (3a) der Abschirmwand (3) und der zu bedeckenden Oberfläche (1a) durchtritt.

4. Vorrichtung zum Bedecken der Oberfläche (1a) eines Substrates (1) mit einer Schicht (2) eines flüssigen Materials, die folgendes aufweist, nämlich:
- ein Behandlungsmittel (14), das eine in sich geschlossene Abschirmwand (3) aufweist, die so ausgebildet ist, daß sie in einem Abstand und oberhalb der zu bedeckenden Oberfläche (1a) angeordnet werden kann, wobei diese eine untere Kante (3a) aufweist, die so ausgebildet ist, um zwischen der Oberfläche einen peripheren Zwischenraum (4) zu belassen, wobei die Abschirmwand (3) einen Behandlungsraum (5) definiert, der auf der zu bedeckenden Oberfläche einen zu behandelnden Bereich (6) begrenzt;
- Mittel (13) zum Einstellen eines kontrollierten Unterdruckes innerhalb des Behandlungsraums (5), um in dem Raum einen inneren Druck zu erzielen, der niedriger ist als der äußere Druck, wodurch ein durch den peripheren Zwischenraum (4) eintretender gasförmiger Strom (7) ermöglicht wird und ein austretender gasförmiger Strom (8) vom Behandlungsraum abgezogen wird;
- Mittel zum Ausbilden einer turbulenten vermischten Abströmung zwischen einem flüssigen Strom (10), der das flüssige Bedeckungsmaterial enthält, und einem gasförmigen Strom in dem unter Unterdruck stehenden Behandlungsraum (5), wobei die turbulente vermische Abströmung mit der ausgedehnten Oberfläche (1b) in dem zu behandelnden Bereich (6) in Kontakt tritt, wobei das flüssige Material niedergeschlagen wird und anschließend mit dem austretenden Strom (8) abgezogen wird,
dadurch gekennzeichnet, daß die Mittel zum Ausbilden der turbulenten vermischten Abströmung als ein gesteuertes Einführmittel (16) für den flüssigen Strom (10) ausgebildet sind, das im Bereich des peripheren Zwischenraums (4) zwischen der unteren Kante (3a) der Abschirmwand (3) und der zu bedeckenden Oberfläche (1a) angeordnet ist, wobei der kontrollierte flüssige Strom mit dem durch den Zwischenraum eintretenden gasförmigen Strom die turbulente vermischte Abströmung ausbildet, die vom Kontakt mit der ausgedehnten Oberfläche (1b) in dem zu behandelnden Bereich (6) abgesaugt wird.

5. Vorrichtung nach Anspruch 4, dadurch gekennzeichnet, daß die kontrollierten Einführmittel (16) des flüssigen Stroms eine kalibrierte Öffnung (9) aufweisen, die den flüssigen Strom dann durchtreten läßt, wenn der Druckunterschied stromaufwärts und stromabwärts der Öffnung größer ist als die Verlustlast der Öffnung gegenüber dem flüssigen Strom.

6. Vorrichtung nach Anspruch 4, dadurch gekennzeichnet, daß die Behandlungsmittel (14) eine weitere in sich geschlossene äußere Wand (11) aufweisen, die getrennt von der Abschirmwand (3) ist, wobei diese den Durchtritt (12) für den gasförmigen Strom durch den peripheren Zwischenraum (4) zwischen der unteren Kante (3a) der Abschirmwand (3) und der zu bedeckenden Oberfläche (1a) abgrenzt.

7. Vorrichtung nach Anspruch 4, dadurch gekennzeichnet, daß sie folgendes aufweist, nämlich:
- Mittel zum Auftrennen (17) der vermischten Abströmung in einen gasförmigen Strom (18) und in einen flüssigen Strom (19),
- Mittel zum Wiederrückführen des flüssigen Stroms zu den kontrollierten Einführmitteln (16);
- ein weiteres Mittel (13) zur Rückführung des gasförmigen Stroms (18) als eintretender gasförmiger Strom (7), wobei die Mittel zur Rückführung des gasförmigen Stroms identisch zum Mittel des kontrollierten Unterdrucks sind.

## Claims

1. Process for covering a surface (1a) of a substrate (1) with a layer (2) of a fluid material, according to which:
(a) with a confining wall (3) closed up on itself, arranged some distance from and above the surface to be covered (1a), and whose lower edge (3a) forms together with the latter a peripheral void (4), is defined a treatment chamber (5) delimiting an area (6) to be treated on the said surface to be covered
(b) a controlled vacuum is established inside the treatment chamber (5) by admitting an incoming gas stream (7) via the peripheral void (4), and by extracting an outgoing gas stream (8) from the treatment chamber, so as to obtain an internal pressure in the said chamber which is lower than the external pressure
(c) a turbulent mixed flow between a fluid stream (10), comprising the fluid covering material, and a gas stream, is formed in the pressurized treatment chamber (5), the said turbulent mixed flow coming into contact with the developed surface (1b) in the area (6) to be treated, while depositing the fluid material therein, then being discharged together with the outgoing gas stream (8)
characterized in that the fluid stream (10) is introduced in a controlled manner at the peripheral void (4) between the lower edge (3a) of the confining wall (3) and the surface to be covered (1a), the said controlled fluid stream forming, together with the gas stream (7) entering via the said void, the turbulent mixed flow, aspirated in contact with the developed surface (1b) in the area (6) to be treated.

2. Process according to Claim 1, characterized in that the fluid stream (10) introduced (7) into the treatment chamber (5) is controlled by a calibrated orifice (9), allowing through the said fluid stream when the difference in pressure between the upstream and the downstream of the said orifice is greater than the loss of head of the said orifice in relation to the said fluid stream.

3. Process according to Claim 1, characterized in that, with another external wall (11), closed up on itself, separated from the confining wall (3), a passage (12) for the incoming gas stream (7) is delimited with this latter wall via the peripheral void (4) between the lower edge (3a) of the confining wall (3) and the surface to be covered (1a).

4. Installation for covering the surface (1a) of a substrate (1) with a layer (2) of a fluid material, comprising:
- a means (14) of treatment, comprising a confining wall (3) closed up on itself, designed so as to be arranged some distance from and above the surface to be covered (1a), with a lower edge (3a) adapted so as to form together with the latter a peripheral void (4), the said confining wall defining a treatment chamber (5) delimiting an area (6) to be treated on the said surface to be covered
- a means (13) for establishing a controlled vacuum inside the treatment chamber (5) by admitting an incoming gas stream (7) through the peripheral void (4), and by extracting an outgoing gas stream (8) from the treatment chamber, so as to obtain an internal pressure in the said chamber which is lower than the external pressure
- a means for forming in the pressurized treatment chamber (5) a turbulent mixed flow between a fluid stream (10), comprising the fluid covering material, and a gas stream, the said turbulent mixed flow coming into contact with the developed surface (1b) in the area (6) to be treated, while depositing the fluid material therein, then being discharged together with the outgoing stream (8)
characterized in that the means for forming the turbulent mixed flow is a means of controlled introduction (16) of the fluid stream (10), disposed at the peripheral void (4) between the lower edge (3a) of the confining wall (3) and the surface to be covered (1a), the said controlled fluid stream forming, together with the gas stream entering via the said void, the turbulent mixed flow, aspirated into contact with the developed surface (1b) in the area (6) to be treated.

5. Installation according to Claim 4, characterized in that the means of controlled introduction (16) of the fluid stream comprise a calibrated orifice (9), allowing through the fluid stream when the difference in pressure between the upstream and the downstream of the said orifice is greater than the loss of head of the said orifice in relation to the said fluid stream.

6. Installation according to Claim 4, characterized in that the means of treatment (14) comprises another, external, wall (11) closed up on itself, separated from the confining wall (3), delimiting with the latter a passage (12) for the incoming gas stream via the peripheral void (4) between the lower edge (3a) of the confining wall (3) and the surface to be covered (1a).

7. Installation according to Claim 4, characterized in that it comprises:
- a means (17) of separating the mixed flow into a gas stream (18) and a fluid stream (19)
- a means (30) of recycling the fluid stream towards the means of controlled introduction (16)
- another means of recycling (13) the gas stream (18) in the guise of an incoming gas stream (7), the said means of recycling the gas stream being in particular identical to the means of controlled vacuum.
